# EUROPÄISCHE PATENTSCHRIFT

(11) **EP 0 646 781 B1**
(45) Veröffentlichungstag und Bekanntmachung des Hinweises auf die Patenterteilung: **18.03.1998**
(21) Anmeldenummer: 94114521.1
(22) Anmeldetag: 15.09.1994
(51) Int. Cl.: G01M 3/32, G01M 3/26

(54) **Verfahren und Anordnung zum Prüfen der Dichtigkeit des Gasentnahmesystems einer Gasanalysevorrichtung**
Method and arrangement for examining the tightness of a gas withdrawing system of a gas analysing device
Méthode et arrangement pour examiner l'étanchéité d'un système de débit de gaz d'un dispositif d'analyse de gaz

(30) Priorität: 05.10.1993 DE 4333951
(43) Veröffentlichungstag der Anmeldung: 05.04.1995
(73) Patentinhaber: SIEMENS AKTIENGESELLSCHAFT, 80333 München (DE)
(72) Erfinder: Kimmig, Ludwig, D-76275 Ettlingen (DE)

(56) Entgegenhaltungen:
- US-A- 4 523 452
- US-A- 4 776 206
- PATENT ABSTRACTS OF JAPAN vol. 18 no. 45 (P-1681) ,24.Januar 1994 & JP-A-05 273012 (TOKYO GAS CO. LTD.) 22.Oktober 1993,
- PATENT ABSTRACTS OF JAPAN vol. 9 no. 72 (P-345) ,2.April 1985 & JP-A-59 203938 (HITACHI SEISAKUSHO KK) 19.November 1984,

## Beschreibung

Die Erfindung betrifft ein Verfahren und eine Anordnung zum Prüfen der Dichtigkeit des Gasentnahmesystems einer Gasanalysevorrichtung gemäß den Oberbegriffen der Ansprüche 1 und 3. Ein solches Verfahren und eine solche Anordnung sind aus der DE-PS 41 29 070 bekannt.

Gasanalysevorrichtungen bestehen im allgemeinen aus einem Entnahmesystem, mit dem Meßgas dem zu untersuchenden Gas entnommen, aufbereitet und einem Analysator zugeführt wird. Zur Förderung des Meßgases dient eine Meßgaspumpe; der Meßgasstrom wird mit einem Durchflußmesser überwacht. Beim Einsatz einer solchen Gasanalysevorrichtung als Autoabgasmeßgerät, mit dem die Zusammensetzung des Abgases von Kraftfahrzeugmotoren gemessen wird, müssen aufgrund behördlicher Vorschriften Leckprüfungen des Entnahmesystems in regelmäßigen Abständen durchgeführt werden.

Aus der DE-PS 41 29 070 ist es bekannt, Lecktests von Abgasmeßgeräten in der Weise durchzuführen, daß zunächst über eine Entnahmesonde Abgas dem Analysator zugeführt wird und die Konzentration mindestens einer der Gaskomponenten bestimmt wird. Dann wird der Gasweg im Bereich der Entnahmesonde abgesperrt und mittels einer Pumpe ein Unterdruck in den gasführenden Teilen des Abgasmeßgerätes erzeugt. Nach einer vorgegebenen Zeit wird die Konzentration der vorher bestimmten Gaskomponente erneut gemessen. Bei einer Veränderung der Gaskonzentration wird ein Leck signalisiert. Die Leckprüfung beruht auf dem Prinzip, daß im Falle eines Lecks das im Entnahmesystem eingeschlossene Abgas durch Luft ersetzt wird und sich damit die Konzentration der Abgaskomponenten ändert.

Es wurde auch schon vorgeschlagen, das Entnahmesystem abzudichten und danach die Gaspumpe einzuschalten. Wenn der dadurch erzeugte Unterdruck ausreichend hoch ist, wird die Pumpe ausgeschaltet. Der Unterdruck wird gemessen und überwacht. Wenn ein Leck vorhanden ist, steigt der Druck an. Der Drucksensor registriert dies und löst eine Fehlermeldung aus.

Aus der US-PS 4 776 206 ist es bekannt, zur Prüfung der Dichtigkeit eines Testobjekts dieses an einer Gasquelle mit hohem Gasdruck anzuschließen und dabei den Gasstrom von der Gasquelle zu dem Testobjekt mittels eines Durchflußmessers zu erfassen und auf Überschreiten einer Schwelle zu überwachen.

Der vorliegenden Erfindung liegt die Aufgabe zugrunde, ein weiteres Verfahren zum Prüfen der Dichtigkeit des Gasentnahmesystems einer Gasanalysevorrichtung anzugeben, das im wesentlichen mit den üblichen, ohnedies vorhandenen Komponenten einer Gasanalyseeinrichtung durchgeführt werden kann. Ferner soll eine Anordnung zur Durchführung eines solchen Verfahrens geschaffen werden.

Erfindungsgemäß werden diese Aufgaben mit den in den Ansprüchen 1 und 3 angegebenen Maßnahmen gelöst.

Anhand der Zeichnung werden im folgenden die Erfindung sowie Ausgestaltungen und Ergänzungen näher beschrieben und erläutert.
- Figur 1: zeigt den prinzipiellen Aufbau eines Ausführungsbeispiels,
- Figur 2: veranschaulicht das neue Verfahren.

Mit ES ist die Entnahmesonde eines Auto-Abgasmeßgerätes bezeichnet, die für die Messungen mit ihrem vorderen offenen Ende in den Auspuff eines Kraftfahrzeuges gesteckt wird. Sie enthält ein Absperrventil, das mit einem Drehknopf DK betätigt wird. Statt dessen kann selbstverständlich auch ein Magnetventil verwendet werden. Durch die Entnahmesonde ES saugt eine Gaspumpe GP, unterstützt von einer Kondensatpumpe KP, Abgas an, das durch einen Schlauch SL in die Kondensiereinrichtung KS gelangt, wo es entfeuchtet wird. Das ausgeschiedene Kondensat wird von der Kondensatpumpe KP über ein Rückschlagventil RV2 abgepumpt. Das entfeuchtete Abgas wird von der Meßgaspumpe GP über ein Rückschlagventil RV1 und einen Durchflußmesser DF einer Analysatorzelle AN zugeführt, von wo es ins Freie strömt. Zwischen der Entnahmesonde ES und der Gaspumpe GP können noch weitere Einrichtungen liegen, z. B. ein Magnetventil MV, über welches Luft als Spülgas in das Entnahmesystem eingespeist werden kann. Entsprechend können auch Nullgas und Prüfgas, das sind Gase, welche die Meßgaskomponenten nicht bzw. in bestimmter Konzentration enthalten, zugeführt werden.

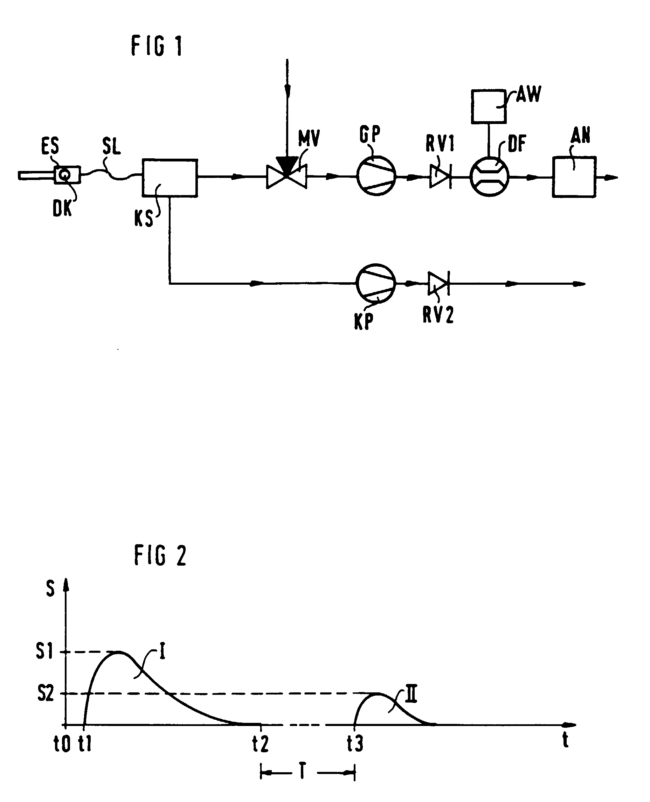

Das Entnahmesystem, also der Bereich zwischen Entnahmesonde ES und den Pumpen GP, KP soll regelmäßig auf Dichtigkeit überprüft werden. Hierzu wird in einem Zeitpunkt t0 (Fig. 2) das Absperrventil in der Entnahmesonde ES mit dem Drehknopf DK geschlossen, das Magnetventil MV in die Stellung gebracht, in der die Kondensiereinrichtung KS gasleitend mit der Gaspumpe GP verbunden, die Zuleitung von außen jedoch abgesperrt ist. Die Kondensatpumpe KP bleibt ausgeschaltet. In einem Zeitpunkt t1 wird die Meßgaspumpe GP eingeschaltet, so daß das im Entnahmesystem enthaltene Gas über den Durchflußmesser DF abgepumpt wird, im Entnahmesystem ein Unterdruck entsteht und die beiden Rückschlagventile RV1, RV2 schließen. Der Durchflußmesser DF erzeugt ein Signal I , dessen zeitliches Integral, aber auch dessen Amplitude S1 der Menge des im Zeitpunkts t1 im Entnahmesystem enthaltenen Gases ist. Wenn das Gas abgepumpt ist, d. h. keine Strömung mehr vorhanden ist, wird die Pumpe GP für eine Zeit T ausgeschaltet. Sollte ein Leck vorhanden sein, wird sich das Entnahmesystem in dieser Zeit T entsprechend der Größe des Lecks füllen. Es wird angenommen, daß ein kleines Leck vorhanden ist. Wenn zum Zeitpunkt t3 die Pumpte GP erneut eingeschaltet wird, tritt daher wieder eine Gasströmung auf. Der Durchflußmesser DF liefert ein Signal der Amplitude S2. Die beiden Signale S1, S2 werden in einer Auswerteeinheit AW miteinander verglichen. Aus der Differenz bzw. aus dem Verhältnis der Signale kann die Größe des Lecks bestimmt werden. Je größer die Zeit T, während der die Pumpe GP ausgeschaltet ist, gewählt wird, um so empfindlicher wird der Lecktest.

## Patentansprüche

1. Verfahren zum Prüfen der Dichtigkeit des Gasentnahmesystems einer Gasanalysevorrichtung mit einer Entnahmesonde (ES) und einer Meßgaspumpe (GP), die das Meßgas von der Entnahmesonde (ES) zu einer Analysatorzelle (AN) führt, **dadurch gekennzeichnet,**
daß bei normalem Druck das Gasentnahmesystem abgedichtet, die Meßgaspumpe (GP) eingeschaltet und ein von einem zum Messen des der Analysatorzelle (AN) zugeführten Meßgasstroms dienenden Durchflußmesser (DF) abgegebenes Signal (I) registriert wird,
daß die Meßgaspumpe (GP) anschließend abgeschaltet und nach einer vorgegebenen Wartezeit (T) erneut eingeschaltet wird und ein dabei vom Durchflußmesser (DF) abgegebenes Signal (II) erfaßt wird
und daß durch Vergleich der beiden Signale (I, II) die Dichtigkeit des Gasentnahmesystems bestimmt wird.

2. Verfahren nach Anspruch 1, **dadurch gekennzeichnet**, daß die Amplituden (S1, S2) der beiden Signale (I, II) miteinander verglichen werden.

3. Anordnung zum Prüfen der Dichtigkeit des Gasentnahmesystems einer Gasanalysevorrichtung mit einer Entnahmesonde (ES), einer Meßgaspumpe (GP), die das Meßgas durch die Entnahmesonde (ES) ansaugt und zu einer Analysatorzelle (AN) fördert, und mit Mitteln zum Abdichten des Gasentnahmesystems, **gekennzeichnet durch,**
Mittel, die ausgerichtet sind, die Meßgaspumpe (GP) bei normalem Druck und abgedichtetem Gasentnahmesystem einzuschalten, dann abzuschalten und nach einer vorgegebenen Wartezeit (T) erneut einzuschalten,
Mittel zum Registrieren eines beim erstmaligen Einschalten der Meßgaspumpe (GP) von einem zum Messen des der Analysatorzelle (AN) zugeführten Meßgasstroms dienenden Durchflußmesser (DF) abgegebenen Signals (I) und
eine Auswerteeinrichtung (AW) zur Bestimmung der Dichtigkeit des Gasentnahmesystems durch Vergleich des registrierten Signals (I) und eines beim erneuten Einschalten der Meßgaspumpe (GP) von dem Durchflußmessers (DF) abgegebenen Signals (II).

4. Anordnung nach Anspruch 3, **dadurch gekennzeichnet**, daß der Durchflußmesser (DF) im Strömungsweg des Meßgases nach der Meßgaspumpe (GP) angeordnet ist.

5. Anordnung nach Anspruch 4, **dadurch gekennzeichnet**, daß der Durchflußmesser (DF) außerhalb des abdichtbaren Entnahmesystems angeordnet ist.

6. Anordnung nach einem der Ansprüche 3 bis 5, **dadurch gekennzeichnet,** daß die Meßgaspumpe (GP) am Meßgasausgang des Entnahmesystems angeordnet ist.

7. Anordnung nach Anspruch 6, **dadurch gekennzeichnet**, daß an die Meßgaspumpe (GP) ein Rückschlagventil (RV1) angeschlossen ist.

## Claims

1. Method for testing the tightness of the gas-sampling system of a gas-analysing device having a sampling probe (ES) and a measurement-gas pump (GP), which leads the measurement gas from the sampling probe (ES) to an analyser cell (AN), characterised in that, at normal pressure, the gas-sampling system is sealed, the measurement-gas pump (GP) is switched on and a signal (I) emitted by a flow meter (DF), which is used for measuring the flow of measurement gas that is supplied to the analyser cell (AN), is registered, in that the measurement-gas pump (GP) is then switched off and is switched on again after a predetermined waiting time (T), and a signal (II) which is thereby emitted by the flow meter (DF) is detected, and in that by comparison of the two signals (I, II), the tightness of the gas-sampling system is determined.

2. Method according to claim 1, characterised in that the amplitudes (S1, S2) of the two signals (I, II) are compared with each other.

3. Arrangement for testing the tightness of the gas-sampling system of a gas-analysing device having a sampling probe (ES), a measurement-gas pump (GP), which draws in the measurement gas through the sampling probe (ES) and conveys it to an analyser cell (AN), and having means for sealing the gas-sampling system, characterised by means which are able to switch on the measurement-gas pump (GP) in the case of normal pressure and a sealed gas-sampling system, then switch it off, and switch it on again after a predetermined waiting time (T), means for registering a signal (I) emitted, when the measurement-gas pump (GP) is switched on for the first time, by a flow meter (DF), which is used for measuring the flow of measurement gas that is supplied to the analyser cell (AN), and an evaluating device (AW) for determining the tightness of the gas-sampling system by comparison of the registered signal (I) and a signal (II) which is emitted by the flow meter (DF) when the measurement-gas pump (GP) is switched on again.

4. Arrangement according to claim 3, characterised in that the flow meter (DF) is arranged in the flow path of the measurement gas, downstream of the measurement-gas pump (GP).

5. Arrangement according to claim 4, characterised in that the flow meter (DF) is arranged outside the sealable sampling system.

6. Arrangement according to one of the claims 3 to 5, characterised in that the measurement-gas pump (GP) is arranged at the measurement-gas outlet of the sampling system.

7. Arrangement according to claim 6, characterised in that a non-return valve (RV1) is connected to the measurement-gas pump (GP).

## Revendications

1. Procédé pour contrôler l'étanchéité d'un système de prélèvement de gaz d'un dispositif d'analyse de gaz, comportant une sonde (ES) de prélèvement et une pompe (GP) de gaz à mesurer, qui conduit le gaz à mesurer de la sonde (ES) de prélèvement à une cellule (AN) d'un dispositif d'analyse, caractérisé en ce que
pour une pression normale, le système de prélèvement de gaz est étanche, la pompe (GP) de gaz à mesurer est mise en circuit et un signal (I) fourni par le dispositif (DF) de mesure de débit servant à la mesure du courant de gaz à mesurer envoyé à la cellule (AN) de dispositif d'analyse est enregistré, en ce que la pompe (GP) de gaz à mesurer est ensuite mise hors circuit et après une durée T d'attente prescrite de nouveau mise en circuit, et un signal (II) fourni alors par le dispositif (DF) de mesure de débit est obtenu, et en ce que l'étanchéité du système de prélèvement de gaz est déterminée par une comparaison des deux signaux (I, II).

2. Procédé suivant la revendication 1, caractérisé en ce que les amplitudes (S1, S2) des deux signaux (I, II) sont comparées l'une à l'autre.

3. Dispositif pour contrôler l'étanchéité d'un système de prélèvement de gaz d'un dispositif d'analyse de gaz comportant une sonde (ES) de prélèvement, une pompe (GP) de gaz à mesurer, qui aspire le gaz à mesurer dans la sonde (ES) de prélèvement et l'envoie à une cellule (AN) de dispositif d'analyse, et des moyens destinés à rendre étanche le système de prélèvement de gaz, caractérisé en ce qu'il est prévu des moyens qui sont agencés de sorte que, pour une pression normale et un système de prélèvement de gaz étanche, la pompe (GP) de gaz à mesurer soit mise en circuit, puis mise hors circuit, et après une durée prescrite (T) de nouveau mise en circuit,
des moyens destinés à enregistrer un signal (I) fourni par un dispositif (DF) de mesure de débit servant à la mesure du courant gazeux de mesure envoyé à la cellule (AN) du dispositif d'analyse lors de la première mise en circuit de la pompe (GP) de gaz à mesurer et
un dispositif (AW) d'exploitation destiné à déterminer l'étanchéité du système de prélèvement de gaz par la comparaison du signal (I) enregistré et d'un signal (II) donné par le dispositif (DF) de mesure de débit lors de la nouvelle mise en circuit de la pompe (GP) de gaz à mesurer.

4. Dispositif suivant la revendication 3, caractérisé en ce que le dispositif (DF) de mesure de débit est disposé dans la voie d'écoulement du gaz à mesurer en aval de la pompe (GP) de gaz à mesurer.

5. Dispositif suivant la revendication 4, caractérisé en ce que le dispositif (DF) de mesure de débit est disposé à l'extérieur du système de prélèvement pouvant être rendu étanche.

6. Dispositif suivant l'une des revendications 3 à 5, caractérisé en ce que la pompe (GP) de gaz à mesurer est disposée à la sortie de gaz à mesurer du système de prélèvement.

7. Dispositif suivant la revendication 6, caractérisé en ce qu'un clapet antiretour (RV1) ) est raccordé à la pompe (GP) de gaz à mesurer.
